# EUROPEAN PATENT APPLICATION

(11) **EP 1 533 945 A1**
(43) Date of publication of application: **25.05.2005**
(21) Application number: 05003632.6
(22) Date of filing: 04.04.2001
(51) Int. Cl.: H04L 12/28, H04L 1/16

(54) **Multicasting method with changing transmission method dependent on receiving state at the base station**

(30) Priority: 06.04.2000 JP 2000105230; 06.04.2000 JP 2000105233
(62) Divisional of application: 01921791.8
(71) Applicant: NTT DoCoMo, Inc., Tokyo 100-6150 (JP)
(72) Inventor: Ohkubo, Shinzo, Yokosuka-shi Kanagawa 238-0011 (JP); Suda, Hirohito, Yokosuka-shi Kanagawa 237-0079 (JP)
(74) Representative: Rees, Alexander Ellison

(57) **Abstract**

In a multicast transmission system in which the same information is transmitted from a base station to a plurality of mobile stations, the mobile station sends a retransmission request signal to the base station when detecting an error in a received multicast signal. The base station monitors a receiving state of a multicast signal in the mobile stations, and changes in transmission method to conform to the receiving state according to a result of monitoring, and sends a multicast signal.

## Description

### TECHNICAL FIELD

The present invention relates to an automatic repeat request (ARQ) technique for improving frame use efficiency in multicast signal transmission to increase throughput in a multicast transmission system.

In addition, the present invention relates to a technique for improving throughput of the whole system by improving receiving quality of a multicast signal in a mobile station or by shortening time required for communication of a multicast signal in a multicast transmission system.

### BACKGROUND ART

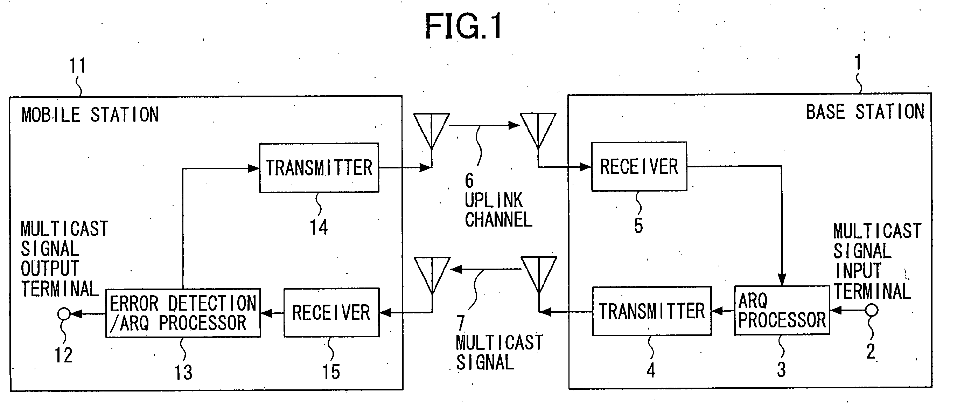

Fig.1 is a block diagram of a conventional multicast transmission system. As shown in the figure, the system includes a base station 1 and a mobile station 11. The base station 1 includes a multicast signal input terminal 2, an ARQ processor 3, a transmitter 4 and a receiver 5. The mobile station 11 includes a multicast signal output terminal 12, an error detection / ARQ processor 13, a transmitter 14 and a receiver 15.

In the base station 1, a multicast signal input from the multicast signal input terminal 2 is received by the ARQ processor 3. The ARQ processor 3 sends the multicast signal to the transmitter 4 after adding error detection code such as CRC to the multicast signal such that an error can be detected slot by slot after dividing the multicast signal into slots. The transmitter 4 sends the signal from the ARQ processor 3 to each mobile station after modulating the signal into a carrier wave.

In the mobile station 11, the receiver 15 receives and demodulates the multicast signal 7, and outputs the multicast signal 7 to the error detection / ARQ processor 13. The error detection / ARQ processor 13 performs error detection for the received multicast signal 7 slot by slot. When an error is detected in the multicast signal 7, the error detection / ARQ processor 13 outputs a retransmission request (NACK (negative acknowledgement)) signal to the transmitter 14 in a random timing which is predetermined in each mobile station. Then, the transmitter 14 sends NACK to the base station 1 via an uplink channel 6. In addition, when there is no error in the multicast signal 7, the mobile station 11 receives multicast signals 7 hereafter without outputting any signal.

The receiver 5 in the base station 1 receives the signal via the uplink channel 6 and demodulates the received signal, and outputs the received signal to the ARQ processor 3. When the received signal is NACK, the ARQ processor 3 stops sending the multicast signal input from the multicast signal input terminal 2 temporarily, and retransmits the multicast signal required by NACK. When the received signal is not NACK, the ARQ processor 3 sends a next multicast signal.

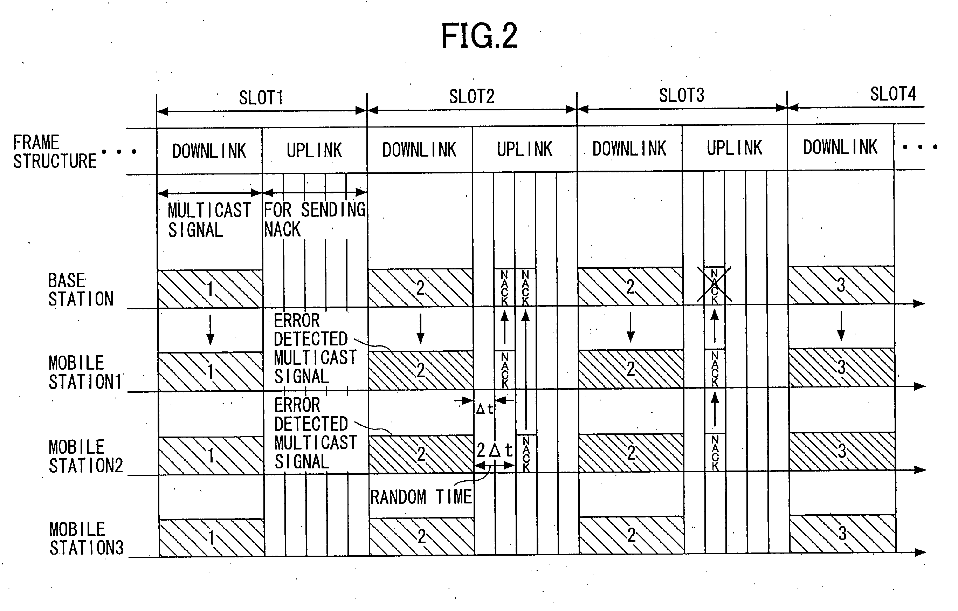

Next, operation of ARQ will be described with reference to Fig.2. Fig.2 shows an example in which one base station and three mobile stations exist.

As for a multicast signal 1 sent by a slot 1, since mobile stations 1-3 do not detect any error in the received multicast signal 1, the mobile stations 1-3 enter a waiting state for a next slot 2.

As for a multicast signal 2 sent by the next slot 2, since the mobile station 3 do not detect any error in the received multicast signal 2, the mobile station 3 enters a waiting state for a next slot 3. However, the mobile station 1 and the mobile station 2 detect an error in the received multicast signal 2, the mobile station 1 and the mobile station 2 send NACK to the base station. Since the mobile station 1 adopts Δt as the random timing, the mobile station 1 sends NACK after elapsing Δt from receiving the multicast signal 2. Since the mobile station 2 adopts 2Δt as the random timing, the mobile station 2 sends NACK after elapsing 2Δt from receiving the multicast signal 2. Then, since the base station receives NACK from the two mobile stations, the base station retransmits the multicast signal 2 in a next slot 3.

As for the multicast signal 2 retransmitted by the slot 3, as in the case of receiving the previous slot, the mobile station 3 does not detect any error and the mobile stations 1 and 2 detect an error. Since the mobile station 1 adopts Δt for setting the random timing, the mobile station 1 sends NACK after elapsing Δt from receiving the multicast signal 2. Likewise, since the mobile station 2 adopts Δt for setting the random timing, the mobile station 2 sends NACK after elapsing Δt from receiving the multicast signal 2. In this case, since the base station can not detect NACK due to collision of NACK signals from the two mobile stations, a multicast signal 3 is sent in a next slot 4.

Then, since the multicast signal 3 sent by the slot 4 is different from a multicast signal which is required by the mobile stations 1 and 2, the multicast signal 3 becomes an error in the mobile stations 1 and 2 even when the mobile stations do not detect any error in the received signal. As a result; retransmission is requested again.

As mentioned above, in the conventional multicast transmission ARQ technique, since a reserved interval is necessary for the retransmission request, capacity is wasted. In addition, there is a large possibility that a malfunction for sending multicast signals after collision of NACK signals occur.

Further, in the conventional multicast transmission, the base station receives NACK as a retransmission request and sends a multicast signal which is required by the retransmission request. However, when there exists an mobile station in which receiving quality is low, retransmission is repeated due to the mobile station so that delay time is increased and throughput of the whole system is lowered.

### DISCLOSURE OF THE INVENTION

The present invention is contrived in view of the above-mentioned problems. A first object of the present invention is to provide a multicast transmission method, a system, a mobile station and a base station in which the reserved interval for the retransmission request is reduced so that frame use efficiency is improved and throughput is increased in multicast signal transmission.

A second object of the present invention is to provide a multicast transmission method, a system, a mobile station and a base station in which receiving quality of a mobile station which receives a multicast signal is improved or time required for communication of the multicast signal is reduced so that throughput of the whole system is improved.

The object can be achieved by the following configuration.

The present invention is a multicast transmission method in a multicast transmission system in which the same information is transmitted from a base station to a plurality of mobile stations, the multicast transmission method including the steps of:
a mobile station sending a retransmission request signal to the base station when the mobile station detects an error in a multicast signal; and
the base station monitoring a receiving state of the multicast signal in the mobile stations, and changing a multicast transmission method to conform to the receiving state according to a result of monitoring, and sending a multicast signal.

The receiving state can be monitored by receiving the retransmission request signal for example. By using the result of the monitoring, an antenna can be controlled such that directivity to the corresponding mobile station can be increased, so that a multicast signal can be sent in which the intensity of the multicast signal conforms to the receiving state of the mobile station. According to this configuration, the number of mobile stations which need retransmission can be decreased successively. As a result, antenna gain to the mobile stations which need retransmission can be further increased so that retransmission can be decreased rapidly. Therefore, the conventional problem in that throughput of the whole system decreases due to retransmission request and retransmission can be solved.

In addition, the present invention is a multicast transmission method in a multicast transmission system in which the same information is transmitted from a base station to a plurality of mobile stations, the multicast transmission method including the steps of:
a mobile station sending a retransmission request signal to the base station when the mobile station detects an error in a multicast signal; and
the base station determining directivity of an antenna on the basis of an incoming wave from the mobile station, and retransmitting a multicast signal by using the directivity of the antenna.

In addition, the present invention is a multicast transmission method in a multicast transmission system in which the same information is transmitted from a base station to a plurality of mobile stations, the multicast transmission method including the steps of:
a mobile station sending a retransmission request signal to the base station when the mobile station detects an error in a multicast signal; and
the base station retransmitting a multicast signal corresponding to the retransmission request signal after changing a transmission method when the base station receives the retransmission request signal from the mobile station.

In the above configuration, the transmission method to be changed is an antenna directivity, a modulation method, a transmission speed, a spreading modulation method, error correction code, or a coded ratio.

Also, according to the above-mentioned invention, it becomes possible that the multicast signal can be retransmitted or transmitted such that the transmission method conforms to the receiving state of the mobile station. Thus, the number of the retransmission request from the mobile stations can be decreased so that the conventional problem in that throughput of the whole system decreases can be solved.
According to the present invention, time required for transmitting the multicast signal can be shortened.

In the above configuration, if the mobile station receives a retransmitted multicast signal without an error after sending a retransmission request signal to the base station when detecting an error in a received multicast signal, the mobile station does not perform error detection for a multicast signal which includes the same information as the retransmitted multicast signal and which is further retransmitted after receiving the retransmitted multicast signal; and
when the mobile station does not detect any error in a received multicast signal, the mobile station does not send any signal.

Accordingly, the number of retransmission requests can be decreased.

Other objects, features and advantages of the present invention will become more apparent from the following detailed description when read in conjunction with the accompanying drawings.

### BRIEF DESCRIPTION OF THE DRAWINGS

Fig.1 is a block diagram of a conventional multicast transmission system;
Fig.2 is a figure showing an example of an automatic repeat request (ARQ) operation according to a conventional technology;
Fig.3 is a block diagram of a multicast transmission system of an example 1-1 of the present invention;
Fig.4 is a figure showing an example of an automatic repeat request (ARQ) operation in the configuration of the example 1-1 of the present invention shown in Fig. 3;
Fig.5 is a block diagram of a multicast transmission system of an example 1-2 of the present invention;
Fig.6 is a block diagram of a multicast transmission system of an example 1-3 of the present invention;
Fig.7 is a block diagram of a multicast transmission system of an example 2-1 of the present invention;
Fig.8 is a figure showing an example for controlling base station antenna directivity in the example 2-1 of the present invention;
Fig.9 is a block diagram of a multicast transmission system of an example 2-2 of the present invention;
Fig. 10 is a flowchart showing an operation of the multicast transmission system of an example 2-2 of the present invention;
Fig.11 is a block diagram of a multicast transmission system of an example 2-3 of the present invention;
Fig. 12 is a figure showing an example of an operation for changing transmission speed and modulation method in the multicast transmission system of the example 2-3 of the present invention.

### PREFERRED EMBODIMENTS FOR CARRYING OUT THE INVENTION

### [First embodiment]

First, a first embodiment corresponding to the first object of the present invention will be described by using examples.

### (Example 1-1)

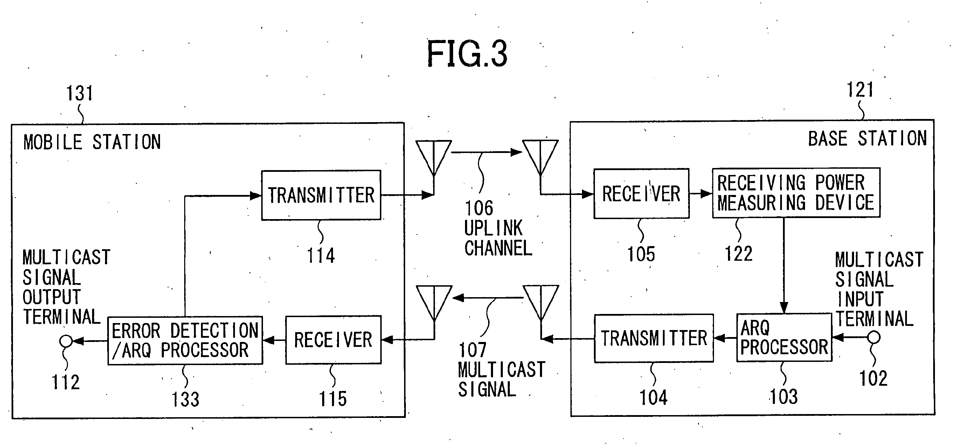

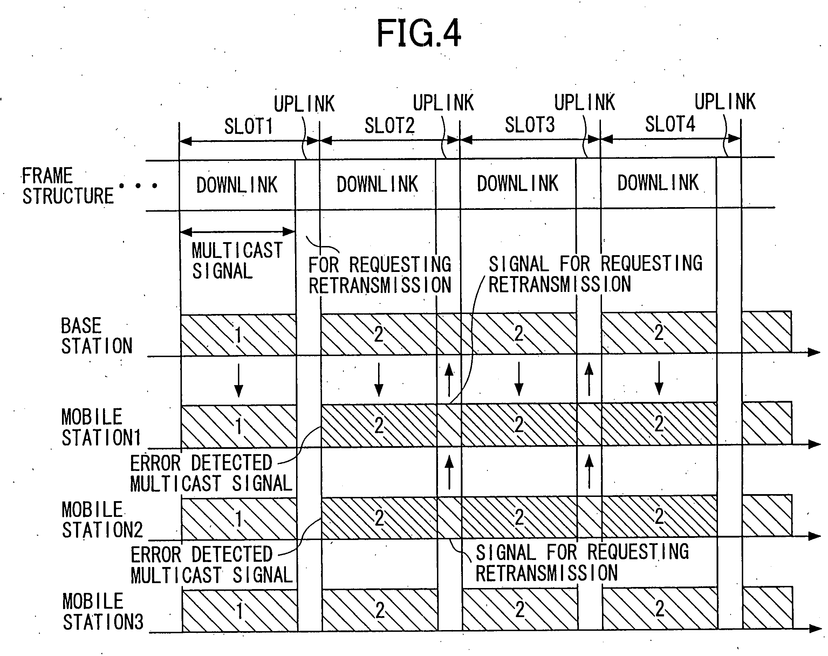

An example 1-1 of the present invention will be described with reference to Fig.3 and Fig.4. In this example, when the base station detects receiving power which is greater than a threshold, the base station recognizes it as a retransmission request for a multicast signal. In this example, the threshold is determined as a noise level.

Fig.3 is a block diagram of a multicast transmission system of the first example. A base station 121 includes a receiving power measuring device 122, and an error detection / ARQ processor 133 in a mobile station 131 performs an operation different from the error detection / ARQ processor 13 in the conventional mobile station 11. These are different points from the conventional multicast transmission system.

In the base station 121, a multicast signal input from the multicast signal input terminal 102 is received by an ARQ processor 103. The ARQ processor 103 sends the multicast signal to the transmitter 104 after adding error detection code such as CRC to the multicast signal such that an error can be detected slot by slot after dividing the multicast signal into slots. The transmitter 104 sends the signal from the ARQ processor 103 to each mobile station after modulating the signal into a carrier wave.

In the mobile station 131, the receiver 115 receives and demodulates the multicast signal 107, and outputs the multicast signal 107 to the error detection / ARQ processor 133. The error detection / ARQ processor 133 performs error detection for the received multicast signal 107 slot by slot. When an error is detected in the multicast signal 107, the error detection / ARQ processor 133 outputs a signal for requesting retransmission to the transmitter 114. Then, the transmitter 114 sends the signal to the base station 121 via an uplink channel 106. The signal for requesting retransmission may be a fixed bit pattern. In addition, when there is no error in the multicast signal 107, the mobile station 131 receives multicast signals hereafter without outputting any signal. In the above-mentioned operation, it is not necessary to predetermine timing for the mobile station to send the retransmission request signal when the base station performs stored demodulation.

After receiving the uplink channel 106, the receiver 105 in the base station 121 outputs the received signal to a receiving power measurement device 122. The receiving power measurement device 122 measures the receiving power of the retransmission request signal from the mobile station, then, when the measured value is greater than the noise level, the receiving power measurement device 122 sends NACK to the ARQ processor 103. The ARQ processor 103 stops sending the multicast signal received from the multicast signal input terminal 102 temporarily, and retransmits the multicast signal requested by NACK. When the receiving power is equal to or lower than the noise level, the receiving power measurement device 122 does not send any signal to the ARQ processor 103. Thus, the ARQ processor 103 sends a next multicast signal. Accordingly, the receiving power can be used as the receiving quality.

In the following, the operation of ARQ will be described concretely with reference to Fig.4. Fig. 4 shows an operation in which one base station and three mobile stations exist.

As for a multicast signal 1 sent by the slot 1, since the mobile stations 1-3 do not detect an error in the multicast signal 1, the mobile stations 1-3 enter a waiting state for a next slot 2.

As for the multicast signal 2 sent by the next slot 2, since the mobile station 3 does not detect an error in the received multicast signal 2, the mobile station 3 enters a waiting state for receiving the next slot 3. However, since the mobile stations 1 and 2 detect an error in the received multicast signal 2, the mobile stations 1 and 2 send a signal for requesting retransmission. Then, although collision of signals for requesting retransmission from two mobile stations occurs, the base station recognizes that retransmission of the multicast signal 2 is requested because the receiving power measured by the receiving power measuring device is greater than the noise level. Thus, the base station retransmits the multicast signal 2 in the next slot 3.

As for the multicast signal 2 retransmitted by the slot 3, as in the case of above-mentioned slot 2, since the mobile station 3 does not detect any error and the mobile station 1 and 2 detect an error, the mobile station 1 and 2 send a signal for requesting retransmission to the base station again. Then, the base station recognizes that retransmission of the multicast signal 2 is requested by measuring the receiving power, then, the base station retransmits the multicast signal 2 in the next slot 4.

In the slot 4, the multicast signal 2 requested by the mobile stations-1 and 2 is retransmitted. Since the mobile stations do not detect an error in the multicast signal 2, the mobile stations enter a waiting state for receiving a next slot. While receiving and transmitting a series of multicast signals, the above-mentioned operation is repeated.

In this way, since the base station determines whether a received signal is a retransmission request by using receiving power level as a receiving quality instead of using the NACK signal itself, the base station can detect a retransmission request even when collision of the retransmission request signals from a plurality of mobile stations occurs. Therefore, since the reserved interval for sending the retransmission request signal can be shortened, the frame use efficiency improves, in which the reserved interval was determined having an adequate margin such that collision does not occur conventionally. That is throughput can be increased.

### (Example 1-2)

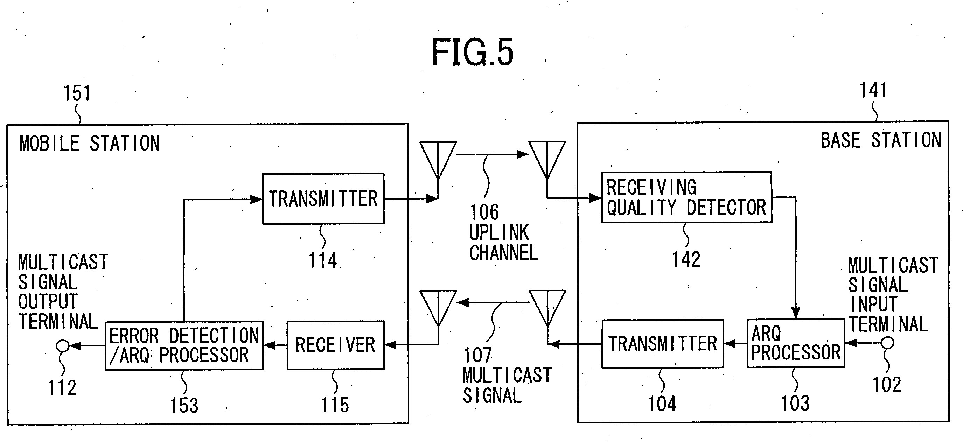

An example 1-2 of the present invention will be described with reference to Fig. 5. In this example, orthogonal GOLD code which is one of spreading codes is used as the retransmission request signal.

Fig. 5 is a block diagram of a multicast transmission system of the example 1-2. A base station 141 includes a receiving quality detector 142, and an error detection / ARQ processor 153 in a mobile station 151 performs an operation different from the error detection / ARQ processor 13 in the conventional mobile station 11. These are different points from the conventional multicast transmission system.

In the base station 141, a multicast signal input from the multicast signal input terminal 102 is received by an ARQ processor 103. The ARQ processor 103 sends the multicast signal to the transmitter 104 after adding error detection code such as CRC to the multicast signal such that an error can be detected slot by slot after dividing the multicast signal into slots. The transmitter 104 sends the signal from the ARQ processor 103 to each mobile station after modulating the signal into a carrier wave.

In the mobile station 151, the receiver 115 receives and demodulates the multicast signal 107, and outputs the multicast signal 107 to the error detection / ARQ processor 153. The error detection / ARQ processor 153 performs error detection for the received multicast signal 107 slot by slot. When an error is detected in the multicast signal 107, the error detection / ARQ processor 153 outputs the orthogonal GOLD code which is a retransmission request signal. When there is no error in the multicast signal 10.7, the mobile station 151 receives multicast signals hereafter without outputting any signal.

The orthogonal Gold code is one example of spreading codes which has a sharp peak in the autocorrelation value. When using such code, a correlator is used as the receiving quality detector 142 in the base station 141, and a correlation value obtained by the correlator is the receiving quality.

In the base station 141, the correlation value is obtained by inputting the received signal which includes equal to or more than one orthogonal Gold codes to the receiving quality detector 142. When the correlation value obtained by the receiving quality detector 142 is greater than a threshold, the received signal is recognized as the retransmission request. In addition, by associating an orthogonal Gold code with a numbered multicast signal uniquely, the base station can determine which multicast signal needs to be sent. That is, the mobile station 151 sends the orthogonal Gold code which is uniquely associated with the number of the multicast signal which the mobile station 151 needs to be retransmitted. The base station obtains correlation values between the received orthogonal Gold code and every possible orthogonal Gold code. Then, when a correlation value is greater than a threshold, the base station retransmits a multicast signal having the number which uniquely corresponds to the orthogonal Gold code used for obtaining the correlation value greater than the threshold. In addition, since the more the number of the mobile stations, the greater the correlation value is Thus, when the base station sends a multicast signal in which the corresponding correlation value is greater than a threshold value and is the largest, it becomes possible that the number of re-retransmission request signals which may occur hereinafter can be decreased.

In this case, since distances between each mobile station which sends the retransmission request signal and the base station are different, and multipath occurs, there may be some timings in which the correlation value takes a peak. Thus, by adopting pass diversity, in the same way as Rake receive in the CDMA system, it is possible to improve ability for detecting receiving quality by synthesizing receiving powers of the retransmission request signals dispersed on the time axis.

In addition, when the timing for sending the retransmission request signal differs by each mobile station, there is a possibility in that receiving quality can not be detected accurately due to that correlation detection timing in the receiving quality detector 142 of the base station 141 is unknown. However, this problem can be solved when the receiving quality detector 142 performs stored demodulation.

Accordingly, since the mobile stations can send signals without considering collision of retransmission request signals at the base station, the reserved interval for sending retransmission request signal can be decreased, in which the reserved interval was determined having an adequate margin such that collision does not occur conventionally. Thus, the frame use efficiency improves. In addition, the retransmission request signal can be detected even when the collision of the retransmission request signal occurs.

### (Example 1-3)

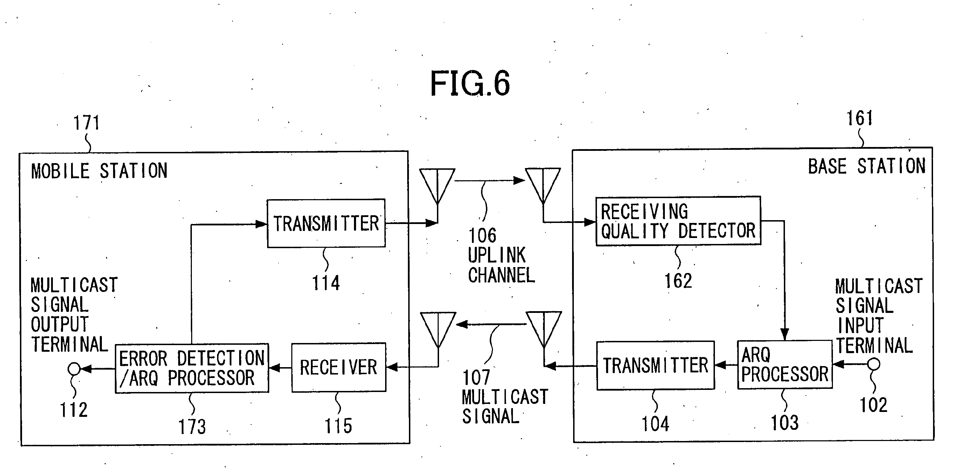

An example 1-3 of the present invention will be described with reference to Fig.6. In this example, error correction code which is one of spreading codes is used as the retransmission request signal.

Fig.6 is a block diagram of a multicast transmission system of the example 1-3. A base station 161 includes a receiving quality detector 162, and an error detection / ARQ processor 173 in a mobile station 171 performs an operation different from the error detection / ARQ processor 13 in the conventional mobile station 11. These are different points from the conventional multicast transmission system.

In the base station 161, a multicast signal input from the multicast signal input terminal 102 is received by an ARQ processor 103. The ARQ processor 103 sends the multicast signal to the transmitter 104 after adding error detection code such as CRC to the multicast signal such that an error can be detected slot by slot after dividing the multicast signal into slots. The transmitter 104 sends the signal from the ARQ processor 103 to each mobile station after modulating the signal into a carrier wave.

In the mobile station 171, the receiver 115 receives and demodulates the multicast signal 107, and outputs the multicast signal 107 to the error detection / ARQ processor 173. The error detection / ARQ processor 173 performs error detection for the received multicast signal 107. When an error is detected in the multicast signal 107, the mobile station 171 sends the error correction code which is a retransmission request signal. When there is no error in the multicast signal 107, the mobile station 171 receives multicast signals hereafter without sending any signal.

The correlation vale of the spreading code is inversely proportional to the number of usable codes. That is, as for a spreading code such as the orthogonal Gold code in which cross-correlation value with other orthogonal Gold code becomes zero, the number of the spreading codes becomes the number of bits which form one code. However, as the cross-correlation value becomes closer to 1, the number of usable spreading codes can be increased. The error correction code is one of the spreading codes in which the correlation value is allowed to some extent so that the number of usable codes can be increased. When using such code, an error correction decoder is used as the receiving quality detector 162 of the base station 161 in which the number of correctable bits obtained when the decoder performs decoding, distance between codes, or likelihood used in decoding is used as the receiving quality. The kind of the code which is used as the spreading code is determined according to the number of codes which are desired to be used, the size of the receiving quality detector, propagation environment between the base station and the mobile station which receives the multicast signal and the like.

The base station 161 obtains the receiving quality by inputting the received signal in which equal to or more than one error correction codes are included to the,receiving quality detector 162. In the process of the receiving quality detector 162 which is a decoder, distances between the received error correction code and every possible error correction code are obtained first. Here, the number of correctable bits or the likelihood can also be used. Then, since the shorter the distance between the codes is, the more definite the signal is, a reciprocal of the distance between the codes is obtained and when the reciprocal is greater than a threshold, the signal is determined to be the retransmission request. Then, the base station retransmits a multicast signal of a number uniquely corresponding to the error correction code used for obtaining the reciprocal of the distance of the codes which is greater than the threshold.

Accordingly, since the mobile stations can send signals without considering collision of retransmission request signals at the base station, the reserved interval for sending retransmission request signal can be decreased, in which the reserved interval was determined for having an adequate margin such that collision does not occur conventionally. Thus, the frame use efficiency improves. In addition, the retransmission request signal can be detected even when the collision of the retransmission request signals occurs.

Although, in the examples 1-2 and 1-3, examples have been described in which the orthogonal Gold code and the error correction code which are spreading codes are used as the retransmission request signal, other spreading codes can also be used such as BCH code, Reed-Solomon code, convolutional code, Preparata code, orthogonal code, biorthogonal code, Gold code, Gold-like code, orthogonal convolutional code, comma-free code, Turbo code and the like.

As mentioned above, according to the conventional technique, the collision of the retransmission request signals is avoided by providing the reserved interval. On the other hand, according to the first embodiment of the present invention, following effect can be obtained. Since the retransmission request can be recognized even when the collision of the retransmission request signals occurs, the reserved interval can be shortened so that frame use efficiency can be improved and throughput is increased in the multicast signal transmission.

### [Second embodiment]

In the following, a second embodiment corresponding to the second object of the present invention will be described using examples.

### (example 2-1)

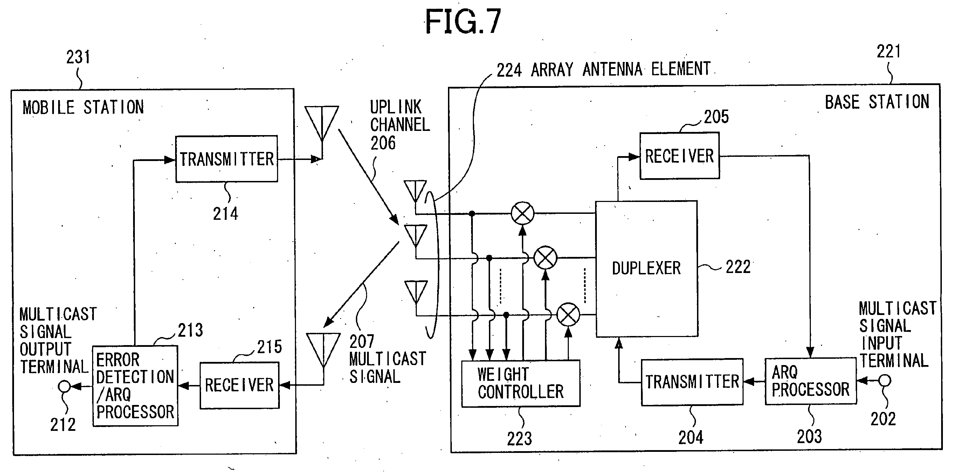

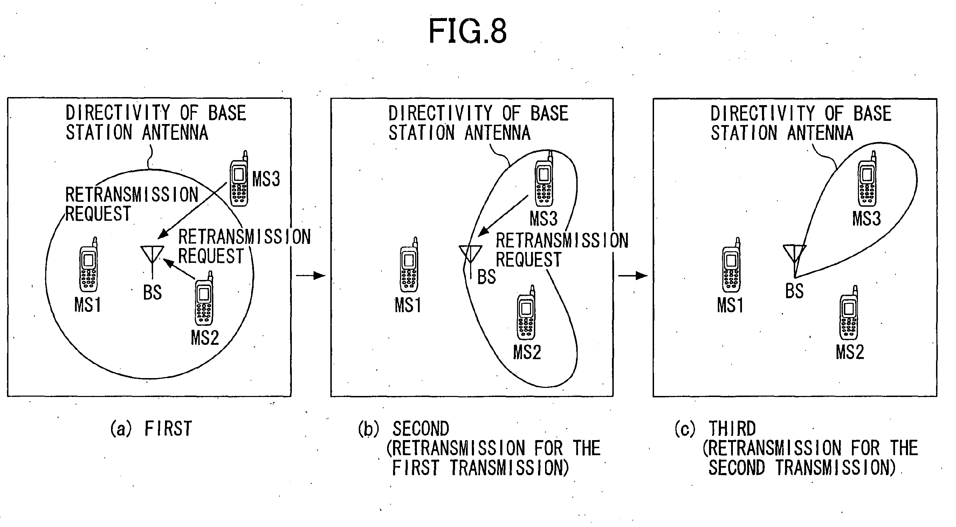

The example 2-1 of the present invention will be described with reference to Figs.7 and 8. Fig.7 is a block diagram of the multicast transmission system in the example 2-1.

The base station 221 includes a multicast signal input terminal 202, an ARQ processor 203, a transmitter 204, a receiver 205, a duplexer 222, a weight controller 223 and array antenna elements 224. The mobile station 231 includes a multicast signal output terminal 212, an error detection / ARQ processor 213, a transmitter 214 and a receiver 215.

In the base station 221, a multicast signal input from the multicast signal input terminal 202 is received by the ARQ processor 203. The ARQ processor 203 sends the multicast signal to the transmitter 204 after adding error detection code such as CRC to the multicast signal such that an error can be detected slot by slot after dividing the multicast signal into slots. The transmitter 204 sends the signal from the ARQ processor 203 to the duplexer 222 after modulating the signal into a carrier wave.

In this embodiment, in the first multicast signal transmission (multicast signal transmission which is not retransmission), since the weights for each array antenna element 224 of the weight controller 223 are the same, the directivities of the antennas of the base station become the same for every direction. The carrier wave from the duplexer 222 is transmitted, from the base station antennas having the directivity, to each mobile station 231 which receives the multicast signal.

In the mobile station 231, the receiver 215 receives and demodulates the multicast signal 207, and outputs the multicast signal 207 to the error detection / ARQ processor 213. The error detection / ARQ processor 213 performs error detection for the received multicast signal 207 slot by slot. When an error is detected in the multicast signal 207, the error detection / ARQ processor 213 outputs a signal for requesting retransmission to the transmitter 214. Then, the transmitter 214 sends the signal to the base station 221 via an uplink channel 206. In this example, NACK which is used when the ARQ normally requests retransmission is used as a signal for retransmission request in this example. In addition, when there is no error in the multicast signal 207, the mobile station 231 receives multicast signals hereafter without outputting any signal.

The base station 221 inputs an incoming wave, received by each array antenna, sent from a plurality of mobile stations which request retransmission to the weight controller 223. The weight controller 223 inputs the incoming waves 'from each mobile station to the duplexer 222 by multiplying weights so as to separate the incoming waves from each mobile station. According to the weight obtained at this time, the directivity of the base station antenna is controlled such that gain is increased to each mobile station which requested retransmission.

Next, after the receiver 205 receives the received signal from the duplexer 222 and demodulates the received signal, the demodulated retransmission request signal is input into the ARQ processor 203. The ARQ processor 203 temporarily stops sending the multicast signal which is input from the multicast signal input terminal 202, and sends the multicast signal which is requested to be retransmitted. At this time, the multicast signal is retransmitted to each mobile station which requested retransmission by using antenna directivity such that gain becomes large for each mobile station which requested retransmission by using the weight values obtained when receiving the incoming waves.

The above-mentioned operation is repeated until the retransmission request from each mobile station stops.

Since the number of mobile stations which request retransmission decreases by repeating retransmission, it becomes possible to increase antenna gain for mobile stations which request retransmission gradually so that receiving quality of a multicast signal to be retransmitted.

Next, the above-mentioned operation will be described concretely by using Fig.8. Figs. 8 shows an operation when three mobile stations exist.

When sending an multicast signal for the first time, since weights for each array antenna element provided from the weight controller are the same, the base station sends the multicast signal with the same antenna gains for each direction.

As shown in Fig.8(a), since an MS (mobile station) 1 does not detect an error in the received multicast signal, the MS 1 does not send any signal to the base station, and enters a waiting state for a next new multicast signal. However, since an MS 2 and an MS 3 detect an error in the received multicast signal, they requests retransmission.

Then, as shown in Fig.8(b), the BS (base station) increases antenna gain for the directions to the positions where the MS 2 and the MS 3 reside by separating incoming waves from the MS 2 and the MS 3 obtained by each array antenna element by multiplying weight value provided from the weight controller 23.

When sending the signal for a second time (first retransmission), the multicast signal is sent by the base station antennas in which gain for directions of the MS 2 and MS 3 is increased by receiving retransmission request signals for the multicast signal sent first. In this case, since the MS 2 does not detect any error in the retransmitted multicast signal, the MS 2 does not send any signal to the base station and enters a state of waiting a next new multicast signal However, since the MS 3 detects an error in the retransmitted multicast signal, the MS 3 requests retransmission again. Here, since the MS 1 did not detect any error when receiving the multicast signal for the first time, the MS 1 does not perform error detection for the multicast signal sent for the second time.

As shown in Fig.8(c), the base station is controlled such that receiving power from the MS 3 becomes the largest by multiplying incoming wave by the weight value from the weight controller 23. That is, the base station antenna gain becomes the largest in the direction of the MS 3.

When sending the multicast signal for a third time (second retransmission), the multicast signal is re-retransmitted by using an base station antenna in which gain of the direction of the MS 3 is increased by the request of re-retransmission for the retransmitted multicast signal. Then, since the MS 3 does not detect any error in the received re-retransmitted multicast signal, the MS 3 does not send any signal to the mobile station, and enters state of waiting a next new multicast signal. Since the MS 1 and the MS 2 did not detect an error in the multicast signal, they do not perform error detection for the re-retransmitted multicast signal.

According to the above-mentioned operation, receiving quality is improved by increasing base station antenna gain for each mobile station which requests retransmission. Thus, the possibility of repeating retransmission decreases so that throughput of the whole system improves.

### (Example 2-2)

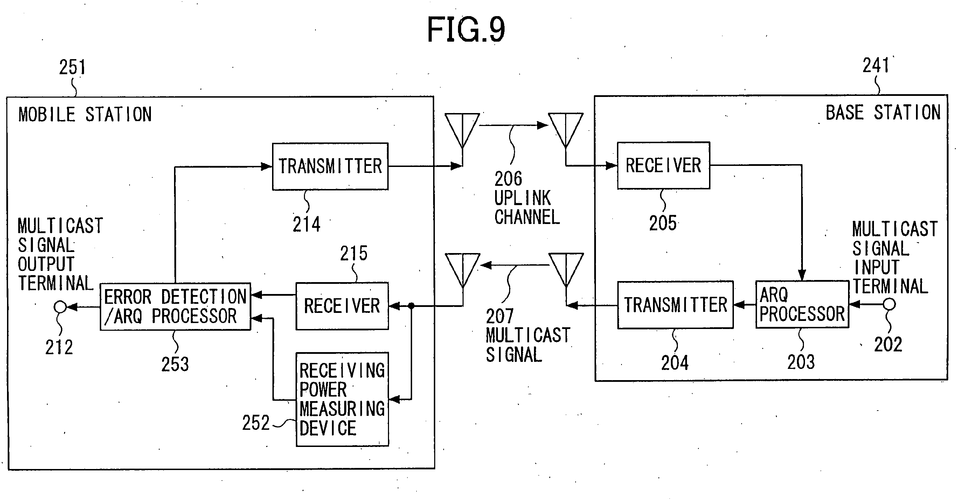

Next, an example 2-2 of the present invention will be described. Fig.9 is a block diagram of a multicast transmission system of the example 2-2. A base station 241 includes a multicast signal input terminal 202, an ARQ processor 203, a transmitter 204, and a receiver 205. The mobile station 251 includes a multicast signal output terminal 212, an error detection / ARQ processor 253, a transmitter 214, a receiver 215, and a receiving power measuring part 252.

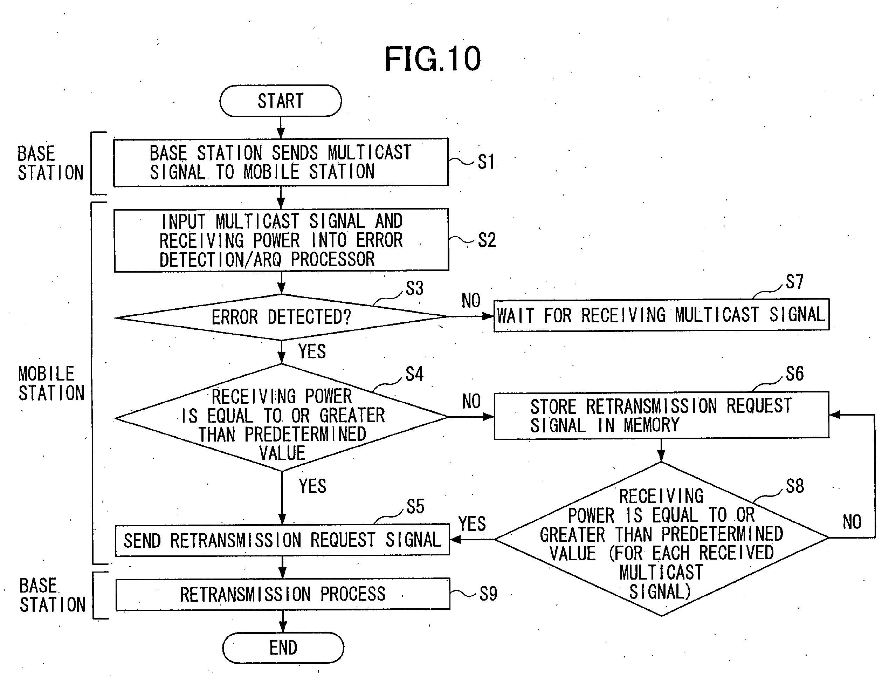

The operation of the multicast transmission system of the example 2-2 will be described by using Fig.9 and a flowchart of Fig. 10.

The base station 241 provides an multicast signal input from the multicast signal input terminal 202 to the ARQ processor 203. The ARQ processor 203 divides the input multicast signal into slots. After that, the ARQ processor adds error detection code such as CRC to the multicast signal such that an error can be detected slot by slot, and sends the multicast signal to the transmitter 204. The transmitter 204 modulates the signal from the ARQ processor 203 into a carrier wave and sends it to each mobile station (step 1).

In the mobile station 251, the receiver 215 receives and demodulates the multicast signal 207. After that, the receiver 215 outputs the signal to the error detection / ARQ processor 253. In addition, a receiving power value of the multicast signal measured by the receiving power measuring part 252 is input to the error detection / ARQ processor 253 (step 2).

The error detection / ARQ processor 253 performs error detection for the received multicast signal 207 slot by slot, and outputs a retransmission request signal to the transmitter 214 when the receiving power value is equal to or greater than a predetermined value and an error is detected (steps 3-5). When the receiving power value is smaller than a predetermined value and the error is detected, the retransmission request signal is not output to the transmitter 214, and is stored in a memory in the error detection / ARQ processor 253 (steps 3, 4, 6). When an error is not detected, the mobile station enters a state of waiting for a next multicast signal regardless of receiving power value (steps 3, 7).

The error detection / ARQ processor 253 performs receiving processing of multicast signals received hereafter irrespective of whether the retransmission signal is stored or not, and stores a retransmission request signal corresponding to a received multicast signal in which an error is detected as long as the receiving power value is smaller than the predetermined value (steps 3, 4, 6 and steps 6, 8). Then, when the receiving power value becomes equal to or greater than a predetermined value, the stored retransmission request signal is output successively (steps 8, 5). The transmitter 214 sends the input retransmission request signal to the base station 241 via an uplink channel 206 (step 5).

It is possible to use a specific channel used specifically for communication between the mobile station and the base station for transmitting the retransmission request signal from the mobile station and for retransmitting the multicast signal corresponding to the retransmission request signal. By using the specific channel, since the time required for transmitting the multicast signal is not dominated by a mobile station in which receiving state is bad, the time can be decreased.

The receiver 205 in the base station 241 outputs the received signal to the ARQ processor 203 after receiving / demodulating an uplink channel 206. When the ARQ processor 203 receives a retransmission request signal, the ARQ processor temporarily stops sending a multicast signal input from the multicast signal input terminal 202, and sends the multicast signal requested by the retransmission request signal again (step 9). When the ARQ processor 203 does not receive the retransmission request signal, the ARQ processor 203 sends a next multicast signal.

As mentioned above, since the retransmission request is sent when the receiving power value is equal to or greater than a predetermined value, the multicast signal is retransmitted when receive state of a mobile station which receives the multicast signal is good. Therefore, the possibility of retransmitting the multicast signal equal to or more than two times decreases so that throughput of the whole system improves.

### (Example 2-3)

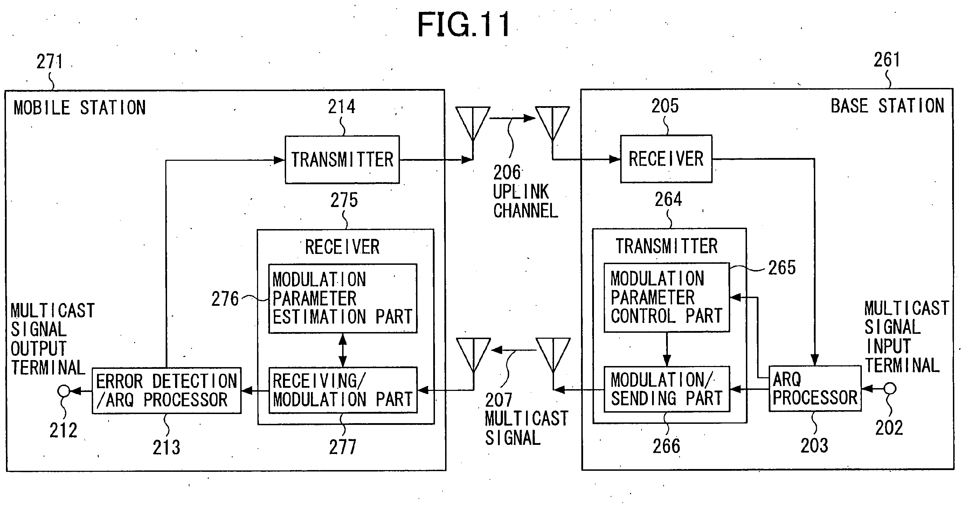

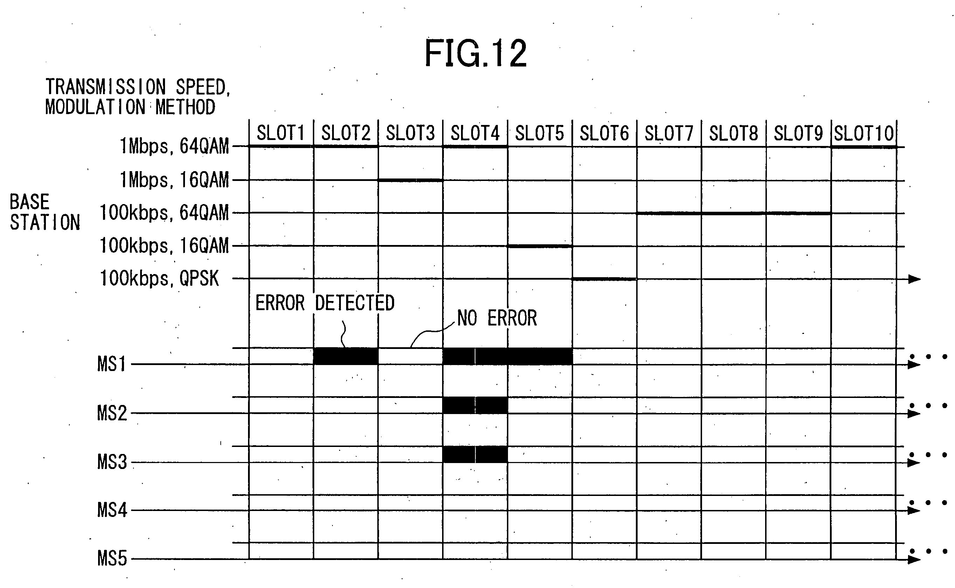

Next, an example 2-3 of the present invention will be described with reference to Fig.11 and Fig.12. In this example, 64QAM, 16QAM, and QPSK are used as modulation methods.

Fig.11 is a block diagram of a multicast transmission system in the example 2-3. The base station 261 includes a multicast signal input terminal 202, an ARQ processor 203, a transmitter 264 and a receiver 205. The transmitter 264 includes a modulation parameter control part 265 and modulation / sending part 266. The mobile station 271 includes a multicast signal output terminal 212, an error detection / ARQ processor 213, a transmitter 214 and a receiver 275. The receiver 275 includes a modulation parameter estimation part 276 and a receiving / modulation part 277.

In the base station 261, a multicast signal input from the multicast signal input terminal 202 is provided to the ARQ processor 203. The ARQ processor 203 divides the input multicast signal into slots. After that, the ARQ processor adds error detection code such as CRC to the multicast signal such that an error can be detected slot by slot, and sends the multicast signal to the transmitter 264. The modulation parameter control part 265 in the transmitter 264 controls the modulation / sending part 266 such that 64QAM modulation is performed in which bit rate is the highest since the multicast signal is sent for the first time. The modulation / sending part 266 modulates the multicast signal into 64QAM, and sends it to each mobile station.

In the mobile station 271, the multicast signal is received by the receiving / modulation part 277 in the receiver 275, and the received signal is input to the modulation parameter estimation part 276. The modulation parameter estimation part 276 detects that the multicast signal is 64QAM, and controls the receiving / demodulation part 277 for demodulating the modulated signal. Then, the receiving / demodulation part 277 outputs the multicast signal to the error detection / ARQ processor 213 after demodulating the multicast signal of 64QAM. The error detection / ARQ processor 213 performs error detection of the received multicast signal 207. When the multicast signal 207 includes an error, the error detection / ARQ processor 213 outputs a retransmission request signal to the transmitter 214. The transmitter 214 sends the retransmission request signal to the base station 261 via an uplink channel 206. When an error is not detected in the multicast signal, any signal is sent to the base station, and the mobile station enters a state of waiting for a new multicast signal.

The base station 261 provides the retransmission request signal received by the receiver 205 to the ARQ processor 203. The ARQ processor 203 temporarily stops sending a multicast signal input from the multicast signal input terminal 202, and sends the multicast signal which is requested to be retransmitted to the modulation / sending part 266 in the transmitter 264 again, and informs the modulation parameter control part 265 that the multicast signal is for retransmission. Then, the modulation parameter control part 265 controls the modulation / sending part 266 such that 16QAM modulation is performed in which bit rate is lower than that of transmission of the first time. Then, the modulation / sending part 266 retransmits the multicast signal to each mobile station which requested retransmission after modulating the multicast signal by 16QAM.

At this time, it is possible that retransmission is performed while changing the modulation method and the like according to the number of mobile stations which receive arbitrary specified multicast signal or a ratio of mobile stations which receive a multicast signal to all base stations in an area. For example, it is possible that retransmission is informed to the modulation parameter control part 265 and retransmission is performed when the ratio of the mobile stations which receive the multicast signal is, for example, equal to or more than 1%.

In addition, it is also possible that the modulation method for sending new multicast signals sent after retransmission is performed is changed from that for the retransmission when the ratio of the mobile stations which receive the multicast signal is, for example, equal to or greater than 30%. That is, antenna directivity control, modulation method, transmission speed, spread modulation, error correction code or coding ratio can be changed for each of a multicast signal to be retransmitted and a multicast signal which is sent after the retransmission according to receiving state of each mobile station which receives a multicast signal.

In the mobile station 271, in the same way as when it receives a multicast signal previously, the modulation parameter estimation part 276 detects that the multicast signal is 16QAM. After that, the receiving / demodulation part 277 demodulates the multicast signal and the multicast signal is input into the error detection / ARQ processor 213. Then, error detection is performed. When an error is detected, retransmission is requested. When an error is not detected, any signal is sent to the base station, and the mobile station enters a state of waiting for a new multicast signal.

Then, the above-mentioned operation is repeated until retransmission request from each mobile station stops.

By using a modulation method such that required Eb/No (Eb/No required for obtaining the same error rate) becomes low, the bit error rate improves. Therefore, the possibility of re-retransmitting (second retransmission) a multicast signal decreases so that throughput of the whole system improves, wherein the Eb/No is energy per bit to noise power density ratio.

In the above-mentioned example, although receiving power is used as the receiving quality, signal to interference ratio (CIR), error rate of bit, packet or slot, or, the number of bit errors which were corrected or likelihood obtained when the error correction code is decoded can be also used as the receiving quality.

Next, the above-mentioned operation will be described concretely by using Fig.12. Fig. 12 shows a case where one base station and five mobile stations exist. After the base station divides a multicast signal into slots, adds error detection code and sends the slots to each mobile station. In this embodiment, when equal to or more than 50% of mobile stations which receive the multicast signal request retransmission, or, when there is no retransmission request for three consecutive slots, the transmission speed of a multicast signal which is newly sent after that is changed. In addition, the modulation method is changed when retransmitting.

As shown in Fig.12, when sending the multicast signal in the first slot, the base station sends the multicast signal at a transmission speed of 1 Mbps and by using the modulation method 64QAM. Since all of the mobile stations MS 1 - MS 5 received the multicast signal without error, all of the mobile stations do not send any signal and enter a state of waiting for a next new multicast signal

When sending the multicast signal in the second slot, in the same way as in the first slot, the base station sends the multicast signal at a transmission speed 1 Mbps and by using the modulation method 64QAM. In this slot, since the MS 1 detects an error in a received multicast signal, the MS 1 requests retransmission to the base station. Since the MS 2-MS 5 received the multicast signal without an error, the MS 2-MS 5 do not send any signal and enter a state of waiting for receiving a next new multicast signal.

When sending the multicast signal in the third slot, which is retransmission for the second slot, the base station retransmits the multicast signal which is sent in the second slot at the transmission speed 1 Mbps and by using 16QAM in which required Eb/No decreases by one stage. Since the MS 1 received the multicast signal without an error, the MS 1 does not send any signal, and enters a state of waiting for receiving a next new multicast signal. The MS 2-MS 5 does not perform error detection for the retransmitted multicast signal and remains in the state of waiting for receiving a new multicast signal.

In the fourth slot transmission, the base station sends the multicast signal by turning back the modulation method to 64QAM by one stage and at the transmission speed 1 Mbps since retransmission ends at the third slot. At this time, since the MS 1-MS 3 detect an error in the multicast signal, the MS 1-MS 3 request retransmission. Since the MS 4 and the MS 5 could receive the multicast signal without an error, the MS 4 and the MS 5 does not send any signal and enters a state of waiting for a next new multicast signal.

In the case of transmission in the fifth slot which is retransmission for the fourth slot, since equal to or more than 60% of mobile stations detected an error and requested retransmission in the previous signal receiving, the transmission speed becomes 100 kbps which is lower by one stage. In addition, since retransmission is performed at this slot, the modulation method becomes 16QAM in which is required Eb/No is lowered by one stage. Then, the multicast signal is retransmitted by using the transmission speed and the modulation method. Then, the MS 1 detects an error again and requests re-retransmission. Since the MS 2 and the MS 3 receive the signal without an error, the MS 2 and the MS 3 do not send any signal and enter a state of waiting for receiving a next new multicast signal. In addition, the MS 4 and the MS 5 do not perform error detection of the retransmitted multicast signal and remain in the state of waiting for receiving the new multicast signal.

In the transmission in the sixth slot which is re-retransmission for the fourth slot, the modulation method becomes QPSK in which the required Nb/No is lowered further by one stage, and the multicast signal is re-retransmitted at a transmission speed 100kbps and by QPSK. At this time, the MS 1 could receive the re-retransmitted without an error, the MS 1 does not send any signal and enters a state of waiting for receiving a next new multicast signal. The MS 2-MS 5 does not perform error detection of the re-retransmitted multicast signal and remain in a state of waiting for receiving a new multicast signal.

In the transmission in the seventh slot, since retransmission has ended, the base station sends a new multicast signal at the transmission speed of 100 kbps and by turning back the modulation method to 16QAM. Since all of the mobile stations MS 1-MS 5 receive the multicast signal without an error, the mobile stations do not send any signal and enter a state of waiting for a next new multicast signal.

In the eighth slot and ninth slot, like in the seventh slot, the multicast signal is transmitted at the transmission speed 100 kbps and by using the modulation method 16QAM. Since all mobile stations receive the multicast signal without an error, the mobile stations do not.send any signal and enters a state of waiting for receiving a next new multicast signal.

In the tenth slot transmission, since the multicast signal has been received for three consecutive slots without an error so that the base station did not receive a request of retransmission, the transmission speed becomes 1 Mbps which is one stage higher. Then, a new multicast signal is transmitted at the transmission speed 1 Mbps by modulation method 64QAM.

The above-mentioned operation is repeated until transmission of a series of multicast signals ends.

As mentioned above, according to the present invention on the second embodiment, a new multicast signal is sent on the basis of a receiving state of mobile stations which received a previous multicast signal. In addition, the number of mobile stations subjected to retransmission is decreased on the basis of the receiving state and the multicast signal is transmitted so as to conform to receiving state of remaining mobile stations. Accordingly, receiving quality improves, and duration of communicating multicast signals decreases. Thus, throughput of the whole system improves.

As mentioned above, the first embodiment and the second embodiment of the present invention have been described. However, it is also possible that to combine the first embodiment and the second embodiment and use the combined system.

That is, the base station judges whether there is a retransmission request according to receiving quality of a received signal, and, when the base station judges that there is a retransmission request, the base station transmits a multicast signal corresponding to the retransmission request. While performing this operation, the base station monitors receiving state of mobile stations and sends a multicast signal by changing transmission method such that the transmission method conforms to receiving state of mobile stations in the basis of the result of monitoring.

Accordingly, frame use efficiency improves and the number of mobile stations subjected to retransmission can be decreased successively. Therefore, throughput of the whole system can be further improved.

The present invention is not limited to the specifically disclosed embodiments, and variations and modifications may be made without departing from the scope of the invention.

## Claims

1. A multicast transmission method in a multicast transmission system in which the same information is transmitted from a base station to a plurality of mobile stations, said multicast transmission method comprising the steps of:
a mobile station sending a retransmission request signal to said base station when said mobile station detects an error in a multicast signal; and
said base station monitoring a receiving state of said multicast signal in said mobile stations, and changing a transmission method to conform to said receiving state according to a result of monitoring, and sending a multicast signal.

2. A multicast transmission method in a multicast transmission system in which the same information is transmitted from a base station to a plurality of mobile stations, said multicast transmission method comprising the steps of:
a mobile station sending a retransmission request signal to said base station when said mobile station detects an error in a multicast signal; and
said base station determining directivity of an antenna on the basis of an incoming wave from said mobile station, and retransmitting a multicast signal by using said directivity.

3. A multicast transmission method in a multicast transmission system in which the same information is transmitted from a base station to a plurality of mobile stations, said multicast transmission method comprising the steps of:
a mobile station sending a retransmission request signal to said base station when said mobile station detects an error in a multicast signal; and
said base station retransmitting a multicast signal corresponding to said retransmission request signal after changing a transmission method when said base station receives said retransmission request signal from said mobile station.

4. The multicast transmission method as claimed in claims 1 or 3, wherein said transmission method to be changed is an antenna directivity, a modulation method, a transmission speed, a spreading modulation method, a transmission speed, a spreading modulation method, error correction code, or a coded ratio.

5. The multicast transmission method as claimed in one of claims 1 to 4, wherein;
when said base station sends a retransmitting multicast signal or when said base station sends a new multicast signal after sending a retransmitting multicast signal, said base station sends said retransmitting multicast signal or said new multicast signal by using a specific channel which is occupied for communication between a mobile station which receives said retransmitting multicast signal or said new multicast signal and said base station.

6. The multicast transmission method as claimed in one of claims 1 to 5, wherein:
if said mobile station receives a retransmitted multicast signal without an error after sending a retransmission request signal to said base station when detecting an error in a received multicast signal, said mobile station does not perform error detection for a multicast signal which includes the same information as said retransmitted multicast signal and which is further retransmitted after receiving said retransmitted multicast signal; and
when said mobile station does not detect any error in a received multicast signal, said mobile station does not send any signal.

7. A multicast transmission system in which the same information is transmitted from a base station to a plurality of mobile station, wherein:
a mobile station sends a retransmission request signal to said base station when said mobile station detects an error in a multicast signal; and
said base station monitors a receiving state of said multicast signal in said mobile stations, and changes a transmission method to conform to said receiving state according to a result of monitoring, and sends a multicast signal.

8. A multicast transmission system in which the same information is transmitted from a base station to a plurality of mobile stations, wherein;
a mobile station sends a retransmission request signal to said base station when said mobile station detects an error in a multicast signal; and
said base station determines directivity of an antenna on the basis of an incoming wave from said mobile station, and retransmits a multicast signal by using said directivity.

9. A mobile station in a multicast transmission system in which the same information is transmitted from a base station to a plurality of mobile stations, said mobile station comprising;
means for controlling said mobile station such that if said mobile station receives a retransmitted multicast signal without an error after sending a retransmission request signal to said base station when detecting an error in a received multicast signal, said mobile station does not perform error detection for a multicast signal which includes the same information as said retransmitted multicast signal and which is further retransmitted after receiving said retransmitted multicast signal, and when said mobile station does not detect any error in a received multicast signal, said mobile station does not send any signal.

10. A base station in a multicast transmission system in which the same information is transmitted from a base station to a plurality of mobile stations, said base station comprising:
means for monitoring a receiving state of a multicast signal in said mobile stations; and
means for changing a transmission method to conform to said receiving state according to a result of monitoring, and sending a multicast signal.

11. A base station in a multicast transmission system in which the same information is transmitted from a base station to a plurality of mobile stations, said base station comprising:
means for determining directivity of an antenna on the basis of an incoming wave from said mobile station, and retransmitting a multicast signal by using said directivity.

12. a base station in a multicast transmission system in which the same information is transmitted from a base station to a plurality of mobile station, said base station comprising:
means for changing a transmission method when said base station receives a retransmission request signal from said mobile station and retransmitting a multicast signal corresponding to said retransmission request signal.

13. The base station as claimed in claims 10 or 12, wherein said transmission method to be changed is an antenna directivity, a modulation method, a transmission speed, a spreading modulation method, error correction code, or a coded ratio.

14. The base station as claimed in one of claims 10 to 13, wherein:
when said base station sends a retransmitting multicast signal or when said base station sends a new multicast signal after sending a retransmitting multicast signal, said base station sends said retransmitting multicast signal or said new multicast signal by using a specific channel which is occupied for communication between a mobile station which receives said retransmitting multicast signal or said new multicast signal and said base station.
